# EUROPEAN PATENT APPLICATION

(11) **EP 4 518 388 A1**
(43) Date of publication of application: **05.03.2025**
(21) Application number: 23315334.5
(22) Date of filing: 31.08.2023
(51) Int. Cl.: H04W 12/12, G06Q 20/32, G06Q 20/34, G06Q 20/40

(54) **METHOD FOR RELAY ATTACK PROTECTION OF MONETARY TRANSACTIONS**

(71) Applicant: THALES DIS FRANCE SAS, 92190 Meudon (FR)
(72) Inventor: Boursier, Carine, 13400 AUBAGNE (FR); Pahaut, Olivier, 83270 ST CYR SUR MER (FR); Paladjian, Pierre, 13190 ALLAUCH (FR)
(74) Representative: Grevin, Emmanuel

(57) **Abstract**

The invention is a method for relay attack protection of a transaction involving a payment instrument (10) receiving a command (71) from a coupled terminal (20); the transaction having a transaction type and an amount. The method comprises the following steps:
- upon receipt of the command, the payment instrument sends, through a wireless channel, to an appliance (30) a decision request (72) comprising said amount and transaction type;
- responsive to the decision request, the appliance determine an agreement or a refusal of a user using said amount and transaction type;
- the appliance sends to the payment instrument a decision message (73) reflecting said agreement or refusal;
- upon receipt of the decision message, the payment instrument generates a cryptogram (84) either authorizing the transaction to continue only in case of agreement or refusing the transaction only in case of refusal; then sends it to the terminal.

## Description

### (Field of the invention)

The present invention relates to methods for protecting monetary transactions against relay attacks. It relates particularly to methods for relay attack protection of monetary transactions involving a smart card coupled to a payment terminal.

### (Background of the invention)

Relay attacks can occur during a payment transaction involving a banking card and a payment terminal that has been hacked. The hacked payment terminal establishes a hidden bridge between the banking card and a remote terminal like a Point-Of-Sale (POS) terminal or an Automated Teller Machine (ATM). The hidden bridge may be relayed from the hacked payment terminal to the remote terminal by a fake card. Such a relay attack can occur even if the banking card is inserted in the payment terminal and communicates through a contact communication interface. Thus, unwanted payment or cash withdrawing transactions can occur for a money amount that is not controlled by the legitimate cardholder (i.e. user of the banking card).

Some solutions are known to counter relay attack, especially when the payment card communicates through its contactless communication interface.

The document US11432155B2 discloses a method preventing relay attacks based on time period analysis.

The document US2022/0067687A1 discloses a method for contactless payment relay attack protection based on processing time measurement.

### (Summary of the Invention)

There is a need to propose way to prevent relay attacks even if the payment card is inserted in a payment terminal.

The invention aims at solving the above mentioned technical problem.

An object of the present invention is a method for relay attack protection of a monetary transaction involving a payment instrument which is coupled to a payment terminal that sends a Payment transaction elements signature command to the payment instrument. The monetary transaction has a transaction type and is made for an amount. The payment instrument is assigned to a user. The method comprises:
- in response to receiving the Payment transaction elements signature command, sending by the payment instrument a decision request through a wireless channel to a portable appliance assigned to the user, said decision request comprising said amount and transaction type; said portable appliance being distinct from the payment instrument;
- responsive to said decision request, determining by the portable appliance an agreement or a refusal of the user for the monetary transaction using said amount and transaction type;
- then, sending, through the wireless channel, by the portable appliance to the payment instrument a decision message reflecting said agreement or refusal of the user;
- responsive to the receipt of the decision message, generating by the payment instrument a cryptogram either authorizing the monetary transaction to continue only in case of agreement or refusing the monetary transaction only in case of refusal; then sending by the payment instrument the cryptogram to the payment terminal.

Advantageously, the portable appliance may determine the agreement or refusal by capturing an input data through a user interface after providing said amount and transaction type to the user.

Advantageously, the portable appliance may determine said agreement or refusal by measuring a preset time during which a user interface captures no input data after providing said amount and transaction type to the user.

Advantageously, the portable appliance may determine said agreement or refusal by comparing said amount with a range of authorized amount predefined in the portable appliance and/or said transaction type with a list of authorized transaction types predefined in the portable appliance.

Advantageously, during the monetary transaction, the payment instrument may communicate with the payment terminal through a contact communication protocol.

Advantageously, during the monetary transaction, the payment instrument may communicate with the payment terminal through a contactless communication protocol.

Advantageously, the payment instrument may be a payment card, a payment ring, a payment bracelet or a payment watch.

Advantageously, the portable appliance may be a mobile phone, a communicating bracelet, communicating glasses or a communicating watch.

An object of the present invention is a system for ensuring relay attack protection of a monetary transaction. The system comprises a payment instrument and a portable appliance distinct from the payment instrument. The payment instrument is configured to receive from a coupled payment terminal a Payment transaction elements signature command belonging to said monetary transaction. The monetary transaction has a transaction type and is requested for an amount. Both the payment instrument and the portable appliance are assigned to a user. In response to receiving the Payment transaction elements signature command, the payment instrument is configured to send a decision request through a wireless channel to the portable appliance, said decision request comprising said amount and transaction type. Responsive to said decision request, the portable appliance is configured to determine an agreement or a refusal of the user for the monetary transaction using said amount and transaction type. The portable appliance is configured to send to the payment instrument, through the wireless channel, a decision message reflecting said agreement or refusal of the user. Responsive to the receipt of the decision message, the payment instrument is configured to generate a cryptogram either authorizing the monetary transaction to continue only in case of agreement or refusing the monetary transaction only in case of refusal and to send the cryptogram to the payment terminal.

Advantageously, the portable appliance may be configured to determine said agreement or refusal by capturing an input data through a user interface of the portable appliance after providing said amount and transaction type to the user.

Advantageously, the portable appliance may be configured to determine said agreement or refusal by measuring a preset time during which a user interface of the portable applianċe captures no input data after providing said amount and transaction type to the user.

Advantageously, the portable appliance may be configured to determine said agreement or refusal by comparing said amount with a range of authorized amount predefined in the portable appliance and/or said transaction type with a list of authorized transaction types predefined in the portable appliance.

Advantageously, during the monetary transaction, the payment instrument may communicate with the payment terminal through a contact communication protocol.

Advantageously, the payment instrument may be a payment card, a payment ring, a payment bracelet, or a payment watch.

Advantageously, the portable appliance may be a mobile phone, a communicating bracelet, communicating glasses or a communicating watch.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows an exemplary architecture of a system for ensuring relay attack protection of a monetary transaction that comprises a portable appliance and a smart card according to an example of the invention,
- Figure 2 shows an exemplary flow diagram for protecting a payment transaction according to an example of the invention, and
- Figure 3 shows an exemplary flow diagram for preventing a relay attack during a monetary transaction according to an example of the invention.

### (Detailed description of the preferred embodiments)

Smart cards are portable small devices comprising at least a memory, a microprocessor and an operating system for computing treatments. They may comprise services applications like payment, access control, identity or telecom applications. Smart cards may be considered as secure elements. They may comprise a plurality of memories of different types, like non-volatile memory and volatile memory. They are considered as tamper-resistant (or "secure") because they are able to control access to the data they contain and to authorize or not the use of their data by other machines. A smartcard may also provide computation services based on cryptographic engines. In general, smartcards have limited computing resources and limited memory resources and they are intended to connect a host machine which may provide them with electric power either in contact mode or contactless mode.

The invention may apply to any type of payment instrument intended to participate to a payment transaction with a payment terminal. For example, the payment instrument may be a credit card, a debit card, or a payment instrument hosted on a wearable device like a watch, a ring, or a bracelet.

Some embodiments of the invention may apply to any type of portable appliance intended to be paired to a payment instrument and able to get data from the cardholder. The portable appliance may be a smartphone, a tablet, a Personal Digital Assistant (PDA) or a wearable device like a communicating watch, communicating glasses, or a communicating bracelet for instance.

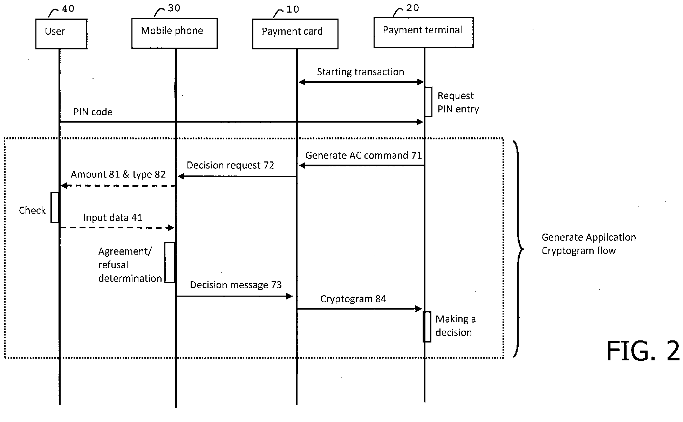

Figure 2 depicts an exemplary flow diagram for protecting a monetary transaction according to an example of the invention.

In this example, the payment instrument 10 is a banking card which may be implemented as a payment smart card, a credit card, or a debit card.

The cardholder 40 (also called user) may want to perform a payment transaction at a terminal 20. The type of the terminal may be a payment terminal like a hardware Point-Of-Sale terminal in a shop, or a payment Kiosk installed at the exit of a car park. Other types of terminals may encompass ATM or softPOS for instance. A softPOS corresponds to a software application emulating a POS terminal. A SoftPOS is generally hosted by a mobile phone or a tablet PC.

The payment transaction for a determined money amount 81 starts in a conventional way between the banking card 10 and the payment terminal 20. In this example, the payment terminal 20 is assumed to be authentic (I.e. not tampered with by an attacker). The cardholder may be requested to enter a PIN code on the keypad of the terminal 20. Depending on security rules, the user can be exempted from entering a PIN code or the card may authenticate the user thanks to a sensed fingerprint.

The payment terminal 20 sends to the banking card 10 a Payment transaction elements signature command 71. In this example, the Payment transaction elements signature command is the Generate Application Cryptogram (Generate AC) command 71 as defined by EMVCo^{®} specifications. In other embodiments, the Payment transaction elements signature command can be any similar command requesting the banking card to send back to the payment terminal a cryptogram that either authorizes the transaction to continue or refuses the transaction.

Additional command/response messages can be exchanged between the payment terminal 20 and the banking card 10 (like a Get Processing Option command for instance) before sending the Generate AC command.

Responsive to the Generate AC command 71, the banking card 10 sends a decision request 72 through a wireless channel to a portable appliance 30 assigned to the same user as the card 10. The decision request 72 comprises the transaction amount 81 and the type 82 of the transaction.

The transaction type can be sent by the terminal in the GENERATE AC command 71 in the tag 9C of the CDOL (Card Risk Management Data Object List) data as defined by EMVCo^{®} Specifications. The transaction type may be one of the following types: Authorization, Balance inquiry, Sale, Cash, Credit Voucher, Void or Mobile topup for example.

The card may initiate establishment of the wireless channel with the portable appliance 30 upon receipt of the Generate AC command 71 or at a previous stage since the card 10 is aware that a payment transaction is pending.

Preferably, the portable appliance is a mobile phone.

It should be noted that the portable appliance 30 is distinct from the payment instrument 10.

Responsive to the decision request 72, the portable appliance determines an agreement or a refusal of the user 40 for the monetary transaction using the amount 81 and/or the transaction type 82.

In some embodiments, a dedicated application hosted on the portable appliance may provide (by display or audio) the user with both the amount 81 and transaction type 82 and capture, through a user interface 31, an input data 41 reflecting the agreement or the refusal of the user 40 for the pending transaction. Alternatively, the dedicated application may determine the agreement or refusal by measuring a preset time during which the user interface 31 does not capture any input data after providing the amount and transaction type to the user.

In some embodiments, the dedicated application may determine the agreement or refusal by comparing the amount 81 with a range 83 of authorized amounts predefined in the portable appliance and/or the transaction type 82 with a list 88 of authorized transaction type(s) predefined in the portable appliance. For example, the predefined range 83 of authorized amounts may be [0 - 25] Euros and the list 88 may comprise only the conventional payment operation type. Thus, the dedicated application may be designed to automatically apply at least one of the two conditions (amount and/or transaction type). Preferably, the two conditions are cumulative.

In some embodiments, the dedicated application may be designed to allow the user to define/update the range 83 and the list 88.

In some embodiments, the range 83 and the list 88 may be predefined in the dedicated application.

Then, the portable appliance sends to the payment instrument, through the wireless channel, a decision message 73 reflecting either the agreement or refusal of the user for the pending transaction.

Upon receipt of the decision message 73, the payment instrument 10 generates a cryptogram 84 authorizing the monetary transaction to continue only in case of agreement or generates a cryptogram 84 refusing the monetary transaction only in case of refusal. Then the payment instrument 10 sends the cryptogram 84 to the payment terminal 20 as a response to the. generate AC command 71. The payment terminal 20 makes a decision based on the content of the cryptogram about the pending transaction or forwards the cryptogram 84 to a bank server (not shown) that makes a decision about the pending transaction.

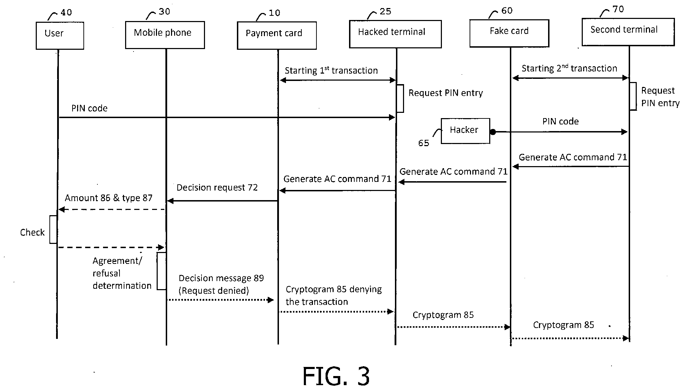

Figure 3 depicts an exemplary flow diagram for thwarting a relay attack attempt during a payment transaction according to an example of the invention.

In this example, the payment instrument 10 is a payment card.

The cardholder 40 (also called user) may want to perform a transaction at a terminal 25 that has been hacked. The type of the terminal 25 may be a conventional payment terminal (e.g. hardware Point-Of-Sale terminal).

The first monetary transaction for a determined money amount 81 starts in a conventional way between the banking card 10 and the hacked payment terminal 25. The user 40 may be requested to enter a PIN code on the keypad of the terminal 25. The first monetary transaction is assumed to be a payment transaction.

In parallel, a malevolent person 65 uses a fake card 60 to initiate a second monetary transaction (payment or cash withdrawal) with a second banking terminal 70 for an amount 86. In this example, the second banking terminal 70 is assumed to be authentic (I.e. not tampered with by the attacker).

If needed, the malevolent person 65 provides the second terminal 70 with a correct PIN code corresponding to the fake card 60.

Then the second terminal 70 sends to the fake card 60 a Payment transaction elements signature command 71. In this example, the Payment transaction elements signature command is the Generate Application Cryptogram (Generate AC) command 71 as defined by EMVCo^{®} specifications. The Generate AC command 71 includes both the amount 86 of the transaction initiated with the second terminal 70 and the type 87 of the second transaction carried out by the second terminal 70.

The fake card 60 forwards the Generate AC command 71 to the hacked terminal 25 which in turn sends the Generate AC command 71 to the payment card 10.

Responsive to the Generate AC command 71, the banking card 10 sends a decision request 72 through a wireless channel to a portable appliance 30 assigned to the same user as the card 10. The decision request 72 comprises the transaction amount 86 and the type 87 of the second transaction. (I.e. parameters of the second transaction)

As described at Figure 2, the payment card 10 may initiate establishment of the wireless channel with the portable appliance 30 upon receipt of the Generate AC command 71 or at any time after the start of the first payment transaction.

Responsive to the decision request 72, the portable appliance 30 determines an agreement or a refusal of the user 40 for the monetary transaction using both the received amount 86 and received transaction type 87.

In some embodiments, the user can be notified by display or audio, via a dedicated application hosted on the portable appliance, of both the received amount 86 and transaction type 87. Then the dedicated application can capture, through a user interface 31 an input data 41 reflecting the agreement or the refusal of the user 40 for the pending transaction. In such a case, the user can easily detect that the amount 86 (of the transaction initiated with the second terminal 70) is different from the amount 81 for which the official transaction has been initiated with the hacked terminal 25. The user can also detect a discrepancy between type of the transaction started with the hacked terminal 25 and type of the transaction started with the second terminal 70.

In some embodiments, the dedicated application may determine the agreement or refusal by comparing the received amount 86 with a range 83 of authorized amounts predefined in the portable appliance and/or the received transaction type 87 with a list 88 of authorized transaction type(s) predefined in the portable appliance. Thus, the dedicated application may be configured to automatically apply at least one of the two conditions (amount and/or transaction type). Preferably, the two conditions are cumulatively applied.

In the example of Figure 3, the amount 86 is assumed to be higher than authorized range 83.

Thus, the portable appliance 30 sends to the payment card 10, through the wireless channel, a decision message 89 reflecting the refusal (i.e. request denied) of the user for the pending transaction.

Upon receipt of the decision message 89, the payment card 10 generates a cryptogram 85 refusing the monetary transaction since the decision message 89 reflects a refusal. Then the payment card 10 sends the cryptogram 85 to the payment terminal 25 as a response to the generate AC command 71. The payment terminal 25 sends the cryptogram 85 to the second terminal 70 (via the fake card .60). The second terminal 70 refuses the second transaction (for the amount 86) or forwards the cryptogram 85 to a bank server (not shown) that refuses the second transaction (i.e. the transaction initiated between the fake card 60 and the second terminal 70).

It should be noted that the first monetary transaction initiated between the payment card 10 and the hacked terminal 25 also fails because of the content of the cryptogram 85.

In some embodiments, the portable appliance 30 may not send a decision message 89 to the payment card 10 since the dedicated application determined that the transaction for the amount 86 must be rejected. After a preset time without response received from the portable appliance 30, the payment card 10 can remain mute or generate a cryptogram 85 refusing the monetary transaction. In all cases, the two pending monetary transactions fail.

In some embodiments, the portable appliance 30 may be paired to the payment instrument 10 in a previous phase. Typically, both devices can store a shared secret value or a shared key allowing to securely secure data exchanges through the wireless channel. Alternatively, the pairing of the two devices may rely on a secret key/public key pair (i.e. asymmetric keys).

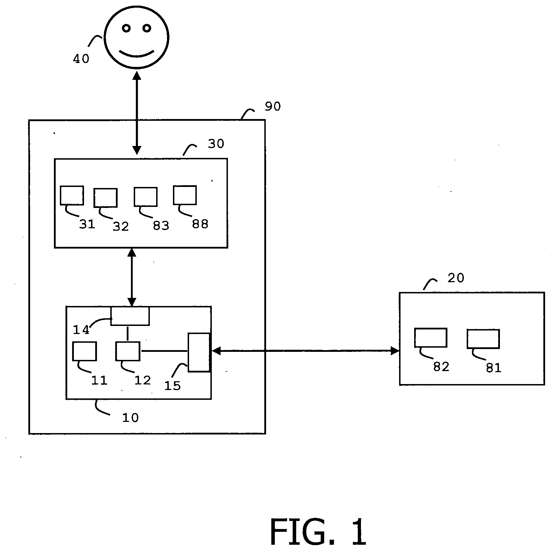

Figure 1 depicts an exemplary architecture of a system 90 for ensuring relay attack protection of a monetary transaction. The system comprises a portable appliance 30 and a payment instrument 10 according to an example of the invention.

The portable appliance 30 can be a mobile phone comprising a wireless communication interface designed to exchange data with the payment instrument. For example, the communication interface may rely on Bluetooth Low Energy^{®} (BLE) or NFC technology.

The payment instrument 10 can be a smart card comprising a wireless communication interface 14 designed to exchange data with the portable appliance 30. The smart card 10 comprises a hardware computing unit 12 and a non-volatile memory storing a set of program instructions which provide feature of the card operating system when executed by the hardware computing unit. The smart card 10 comprises a software payment application 11 intended to be executed by hardware computing unit.

The smart card comprises a conventional physical communication interface 15 designed to exchange data with the payment terminal in contact or contactless mode.

The portable appliance 30 may embed a user input interface 31 allowing to capture data provided by the user 40 of the payment instrument 10. For example, the user input interface 31 may include a keyboard, a microphone, a motion sensor, a camera or a biometric sensor. In some embodiments, the portable appliance 30 may be a tablet PC, a Personal Digital Assistant (PDA) or a wearable device like a watch, a key fob or a bracelet.

During a monetary transaction, the payment application 11 is configured to receive, from a payment terminal 20 coupled to the smart card 10, a Payment transaction elements signature command 71. Preferably, the Payment transaction elements signature command is the Generate Application Cryptogram (Generate AC) command as defined by EMVCo^{®} Specifications.

The monetary transaction is assumed to be initiated for an amount 81 between the smart card 10 and the payment terminal 20. The monetary transaction is initiated for a chosen operation type called the transaction type 82. Both the smart card 10 and the portable appliance 30 are assigned to a same user 40 who is supposed to carry them.

As can be understood, the portable appliance 30 is distinct from the payment instrument 10.

The payment terminal 20 comprises the transaction amount 81 and the transaction type 82 which have been determined for the pending payment transaction. As conventional payment terminals, the payment terminal 20 is able to generate a Generate AC command comprising both the transaction amount 81 and the transaction type 82.

In response to receiving the Generate AC command, the payment application 11 is configured to retrieve the transaction amount 81 and the transaction type 82 from the Generate AC command and to build a decision request 72 comprising said received amount and transaction type. The smart card 10 is configured to establish a wireless channel (for instance in BLE) with the portable appliance 30 and to send the decision request 72 through the wireless channel to the portable appliance 30.

The portable appliance 30. may embed a dedicated application 32 which is configured to, upon receipt of the decision request 72, determine an agreement or a refusal of the user 40 for the monetary transaction using the amount and transaction type conveyed in the decision request 72.

The dedicated application 32 is designed to generate a decision message 73 reflecting the agreement or refusal of the user and to send the decision message to the smart card 10 through the wireless channel.

In response to the receipt of the decision message 73, the payment application 11 is designed to generate a cryptogram. Only in case of agreement of the monetary transaction (according to the received decision message 73), the payment application 11 generates a cryptogram whose content authorizes the monetary transaction to continue. Only in case of refusal of the monetary transaction (according to the received decision message 73), the payment application 11 is designed to generate a cryptogram whose content denies the monetary transaction. Then the payment application 11 is designed to send the generated cryptogram to the payment terminal 20.

As can be noted, the payment application 11 is designed to generate and send a cryptogram in response to the Generate AC command only after receipt of a data reflecting agreement or refusal of the pending transaction.

In some embodiment, the portable appliance 30 may store a predefined range 83 of authorized amounts and/or a predefined list 88 of authorized transaction type(s). The range 83 of authorized amounts and the predefined list 88 of authorized transaction type(s) can be considered as configurations for which the user presets their agreement for carrying out a payment transaction. The dedicated application 32 can be designed to automatically (i.e. without user input on the portable appliance during the payment transaction) determine whether the user agrees or not the pending payment transaction. For instance, the dedicated application 32 can be designed to determine the agreement or refusal of the transaction by comparing the received amount with predefined range 83 and/or the received transaction type with the list 88.

In some embodiment, the dedicated application 32 can be designed to provide the user 40 with the received amount and or transaction type and to get an input data of the user reflecting their agreement or refusal of the pending transaction.

The invention is not limited to the described embodiments or examples. In particular, the described examples and embodiments may be combined.

The invention applies to both payment instruments communicating with a payment terminal through a contactless protocol and to payment instruments communicating with a payment terminal through a contact protocol.

Some embodiments of the invention allow preventing relay attack attempts even if a banking card is inserted in the payment terminal and communicates with the payment terminal through the contact communication interface.

Some embodiments of the invention allow detecting that the transaction type declared to the payment instrument does not match with the transaction type initiated with the payment terminal in front of the user and allow thwarting a relay attack attempting to perform a cash withdrawal without user's knowledge.

Some embodiments of the invention allow detecting that the amount of the transaction declared to the payment instrument does not match with the amount of the transaction initiated with the payment terminal in front of the user and allow thwarting a relay attack attempting to perform a payment transaction without consent of the user.

An advantage of some embodiments of the invention, is to be remain compliant with the usual flow of the Generate Application Cryptogram command/response exchanged between a payment instrument and a payment terminal. Thus, the existing backend machines (or infrastructure) can be kept unchanged.

An additional advantage of some embodiments of the invention, is to provide protection against hijacking of the payment instrument and its associated PIN code.

## Claims

1. A method for relay attack protection of a monetary transaction involving a payment instrument (10) coupled to a payment terminal (20) sending a Payment transaction elements signature command (71) to the payment instrument; the monetary transaction having a transaction type (82) and being made for an amount (81) and the payment instrument being assigned to a user (40); **characterized in that** the method comprises:
- in response to receiving the Payment transaction elements signature command, sending by the payment instrument a decision request (72) through a wireless channel, to a portable appliance (30) assigned to the user, said decision request comprising said amount and transaction type; said portable appliance being distinct from the payment instrument;
- responsive to said decision request, determining by the portable appliance an agreement or a refusal of the user for the monetary transaction using said amount and transaction type;
- then, sending, through the wireless channel, by the portable appliance to the payment instrument a decision message (73) reflecting said agreement or refusal of the user;
- responsive to the receipt of the decision message, generating by the payment instrument a cryptogram (84) either authorizing the monetary transaction to continue only in case of agreement or refusing the monetary transaction only in case of refusal; then sending by the payment instrument the cryptogram to the payment terminal.

2. The method according to claim 1, wherein the portable appliance determines said agreement or refusal by capturing an input data (41) through a user interface (31) after providing said amount and transaction type to the user.

3. The method according to claim 1, wherein the portable appliance determines said agreement or refusal by measuring a preset time during which a user interface (31) captures no input data after providing said amount and transaction type to the user.

4. The method according to claim 1, wherein the portable appliance determines said agreement or refusal by comparing said amount with a range (83) of authorized amount predefined in the portable appliance and/or said transaction type with a list (88) of authorized transaction types predefined in the portable appliance.

5. The method according to claim 1, wherein the payment instrument (10) communicates with the payment terminal (20) through a contact communication protocol.

6. The method according to claim 1, wherein the payment instrument (10) communicates with the payment terminal (20) through a contactless communication protocol.

7. The method according to claim 1, wherein the payment instrument (10) is a payment card, a payment ring, a payment bracelet or a payment watch.

8. The method according to claim 1, wherein the portable appliance is a mobile phone, a communicating bracelet, communicating glasses or a communicating watch.

9. A system (90) for ensuring relay attack protection of a monetary transaction, said system comprising a payment instrument (10) and a portable appliance (30) distinct from the payment instrument, the payment instrument being configured to receive from a coupled payment terminal (20) a Payment transaction elements signature command (71) belonging to said monetary transaction;
the monetary transaction having a transaction type (82) and being requested for an amount'(81) and both the payment instrument and the portable appliance being assigned to a user (40);
**characterized in that**:
- in response to receiving the Payment transaction elements signature command, the payment instrument is configured to send a decision request (72) through a wireless channel to the portable appliance (30), said decision request comprising said amount and transaction type;
- responsive to said decision request, the portable appliance is configured to determine an agreement or a refusal of the user for the monetary transaction using said amount and transaction type;
- the portable appliance is configured to send to the payment instrument, through the wireless channel, a decision message (73) reflecting said agreement or refusal of the user;
- responsive to the receipt of the decision message, the payment instrument is configured to generate a cryptogram (84) either authorizing the monetary transaction to continue only in case of agreement or refusing the monetary transaction only in case of refusal and to send the cryptogram to the payment terminal.

10. The system according to claim 9, wherein the portable appliance is configured to determine said agreement or refusal by capturing an input data (41) through a user interface (31) after providing said amount and transaction type to the user.

11. The system according to claim 9, wherein the portable appliance is configured to determine said agreement or refusal by measuring a preset time during which a user interface (31) captures no input data after providing said amount and transaction type to the user.

12. The system according to claim 9, wherein the portable appliance is configured to determine said agreement or refusal by comparing said amount with a range (83) of authorized amount predefined in the portable appliance and/or said transaction type with a list (88) of authorized transaction types predefined in the portable appliance.

13. The system according to claim 9, wherein the payment instrument (10) communicates with the payment terminal (20) through a contact communication protocol.

14. The system according to claim 9, wherein the payment instrument (10) is a payment card, a payment ring, a payment bracelet, or a payment watch.

15. The system according to claim 9, wherein the portable appliance is a mobile phone, a communicating bracelet, communicating glasses or a communicating watch.
